# EUROPÄISCHE PATENTSCHRIFT

(11) **EP 0 518 159 B1**
(45) Veröffentlichungstag und Bekanntmachung des Hinweises auf die Patenterteilung: **05.04.1995**
(21) Anmeldenummer: 92109223.5
(22) Anmeldetag: 02.06.1992
(51) Int. Cl.: B60T 7/04, G05G 1/14

(54) **Stellvorrichtung für eine an einem Fahrzeug vorgesehene Komponente**
Regulating device for a component, destined for a vehicle
Appareil de réglage pour un élément, destiné à un véhicule

(30) Priorität: 14.06.1991 US 715205
(43) Veröffentlichungstag der Anmeldung: 16.12.1992
(73) Patentinhaber: DEERE & COMPANY, Moline, Illinois 61265 (US)
(72) Erfinder: Hayes, Eugene Gary, Beaver Dam, Wisconsin 53916 (US); Patterson, Jon Michael, Wauwatosa, Wisconsin 53226 (US)
(74) Vertreter: Feldmann, Bernhard

(56) Entgegenhaltungen:
- EP-A- 0 229 350
- US-A- 3 766 802
- US-A- 4 708 028

## Beschreibung

Die Erfindung bezieht sich auf eine Stellvorrichtung für eine an einem Fahrzeug vorgesehene Komponente mit wenigstens einem Stellmittel und einem an die Komponente angeschlossenen Gestänge, wobei das Gestänge über das Stellmittel gegen die Wirkung einer Feder in wenigstens eine Richtung verstellbar ist und eine Anschlagfläche aufweist, die unter der Wirkung der Feder in einer Ausbuchtung des Stellmittels anliegt.

Bei dieser Stellvorrichtung (US-A-4 708 028) ist die am Fahrzeug vorgesehene Komponente als ein Hauptbremszylinder und das Stellmittel als ein Bremspedal ausgebildet. Das Gestänge ist an seinem einen Ende mit dem Zylinder des Hauptbremszylinders verbunden, in dem sich auch die Feder befindet, und mit einer ballig ausgebildeten Nylonbuchse versehen, die in der Ausbuchtung des Bremspedals anliegt. An die Nylonbuchse schließt sich eine Verlängerung an, die durch ein Langloch in dem Bremspedal geführt ist und ein Lösen des Gestänges von dem Bremspedal verhindern soll, wenn ein auf der Verlängerung aufsitzender und gegen das Bremspedal anliegender Sprengring sich lockern sollte. Das Bremspedal ist gegen die Wirkung einer weiteren Feder betätigbar. Damit dient der Sprengring als Anschlag, der das Bremspedal in seiner unbetätigten Stellung hält, und ist ständig der Wirkung der weiteren Feder ausgesetzt, so daß er sich mit der Zeit lockern muß. Um das Gestänge in das Bremspedal einsetzen und mit diesem verbinden zu können, muß der Bereich, im dem das Gestänge durch das Pedal geführt ist, frei zugänglich sein. Im übrigen ist diese Stellvorrichtung teileaufwendig und damit störanfällig.

Bekannt ist außerdem eine Stellvorrichtung mit einem Gestänge (US-A-3 766 802), dessen eines Ende unter der Wirkung einer Feder in einer Ausbuchtung des Bremspedals anliegt. Hier weist ein Bremsgestänge einen vergrößerten Kopfteil auf, der in einer Ausbuchtung eines Bremspedals über einen an dem Bremspedal vorgesehenen Tragteil und eine gebogene Biegefeder gehalten ist. Die Biegefeder ist in den Tragteil eingesetzt und liegt mit ihrem einen Ende gegen die Unterseite des Kopfteiles an. Das Bremspedal kann gegenüber seinem Gestänge keine Relativbewegung ausführen und muß über ein weiteres Federglied in seine Ruhestellung zurückgeführt werden. Zum Einsetzen der Feder muß das Pedal von außen zugänglich sein.

Die mit der Erfindung zu lösende Aufgabe wird darin gesehen, eine derartige Stellvorrichtung vorteilhafter auszubilden. Diese Aufgabe ist nach der Erfindung dadurch gelöst worden, daß das als Anschlagfläche ausgebildete Ende des Gestänges in der Ausbuchtung des Stellmittels anliegt, die Ausbuchtung und das als Anschlagfläche ausgebildete Ende des Gestänges in einer durch eine Bedienungsperson des Fahrzeuges unzugänglichen Kammer bzw. in einem derartigen Gehäuseabschnitt angeordnet sind, die Feder außerhalb einer derartigen Kammer bzw. eines derartigen Gehäuseabschnittes angeordnet ist und das die Kammer bzw. der Gehäuseabschnitt Führungselemente aufweist, die das Gestänge lose und verschiebbar aufnehmen und auf die Ausbuchtung im Stellmittel ausgerichtet sind. Auf diese Weise kann die erste Feder zwei Funktionen übernehmen, die darin bestehen, das Gestänge in seiner Ausbuchtung zu halten und das Stellmittel in seine Ruhestellung oder Ausgangsposition zurückzuführen. Zusätzliche Federmittel sind nicht erforderlich.

Das an das Stellmittel anliegende Ende des Gestänges ist vollständig gekapselt und Umwelteinflüssen nicht ausgesetzt.

Beim gattungsmäßig berücksichtigten Stand der Technik ist das Gestänge mechanisch mit dem Stellmittel verbunden, was einen gewissen Aufwand bedeutet. Bei der Erfindung liegt das vordere Ende des Gestänges lediglich in der Ausbuchtung und wird durch die Feder in diese gedrückt. Damit kann das Stellmittel gegenüber dem Gestänge Relativbewegungen ausführen und das Gestänge kann mit dem Stellmittel in Eingriff geschoben werden, da der Grundrahmen Führungselemente aufweist, die das Gestänge lose und verschiebbar aufnehmen und auf die Ausbuchtung im Stellmittel ausgerichtet sind. Die Führungselemente sind hierzu so auszubilden, daß sie sich in Richtung auf die Ausbuchtung hin "verjüngen", wobei das letzte Führungselement in Größe und Form der Ausbuchtung angepaßt ist, so daß ein Eingriff immer wieder hergestellt werden kann. Zum leichten Einschieben des Gestänges kann mindestens eines der Führungselemente als ein mit einer Öffnung versehener Gehäuseteil ausgebildet sein.

Das Gestänge braucht nicht mit einem vergrößerten Kopfteil versehen zu sein, wenn das in der Ausbuchtung des Stellteils anliegende Ende des Gestänges abgerundet ist. Hierdurch ergibt sich eine einfache aber betriebssichere Anlage in der Ausbuchtung.

Die Feder kann eine weitere Aufgabe übernehmen, wenn nach einem weiteren erfindungsgemäßen Vorschlag die Fahrzeugkomponente einen Stellarm aufweist, an dem das Gestänge mit seinem der Ausbuchtung abgelegenen Ende angeschlossen ist und an dem die Feder angreift. Bei unbetätigten Stellmittel kann dann die Feder auch noch den Stellarm in seine Ausgangsstellung zurückführen und dort halten.

Bei einer Kunststoffbauweise des Fahrzeuges kann die Stellvorrichtung noch so ausgebildet sein, daß das Stellmittel als ein in eine Steuersäule durch eine in dieser vorgesehene Öffnung einsetzbares Pedal ausgebildet und mit einem die Ausbuchtung aufweisenden Ausleger versehen ist. Durch die Führungselemente kann dann das Gestänge bis in die Ausbuchtung des vorher eingesetzten Stellmittels geschoben werden.

Eine leichte Zugänglichkeit ist schließlich dadurch erreichbar, daß der Stellarm mit seiner Feder außerhalb der den Ausleger mit der Ausbuchtung aufnehmenden im wesentlichen geschlossenen Kammer angeordnet ist.

Vorteilhaft ist die Fahrzeugkomponente eine Fahrzeugbremse und / oder eine Kupplung, die am rückwärtigen Ende des Fahrzeuges angeordnet ist bzw. sind.

In der Zeichnung ist ein nachfolgend näher erläutertes Ausführungsbeispiel der Erfindung dargestellt. Es zeigt:
- Fig. 1: ein Fahrzeug für die Grundstückspflege in perspektivischer Ansicht,
- Fig. 2: eine Gestängeanordnung für eine Kupplung und die Bremsen in perspektivischer Ansicht,
- Fig. 3: das vordere Ende eines mit einem Pedal in Eingriff befindlichen Gestänges und
- Fig. 4: den vorderen Teil eines Grundrahmens im Schnitt mit Bremspedal und Gestänge.

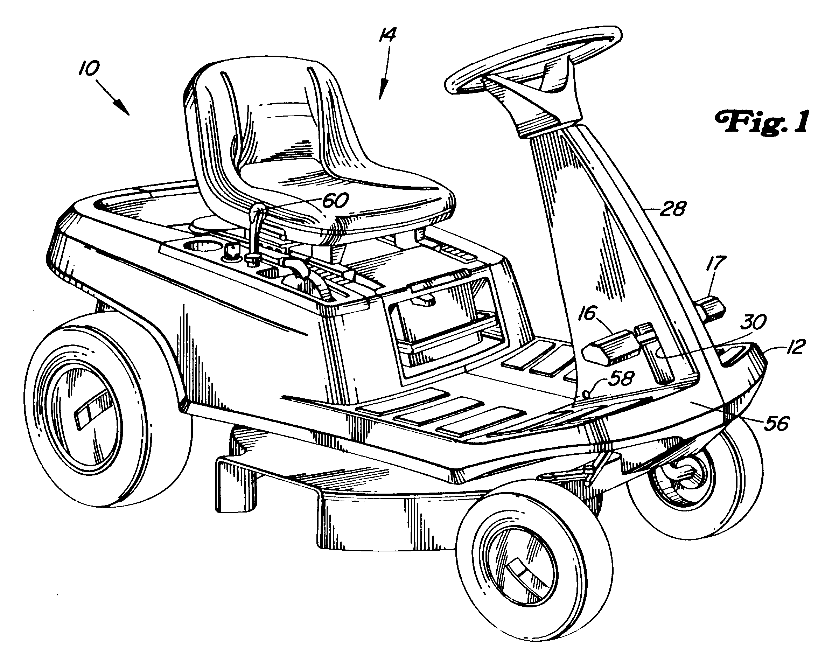

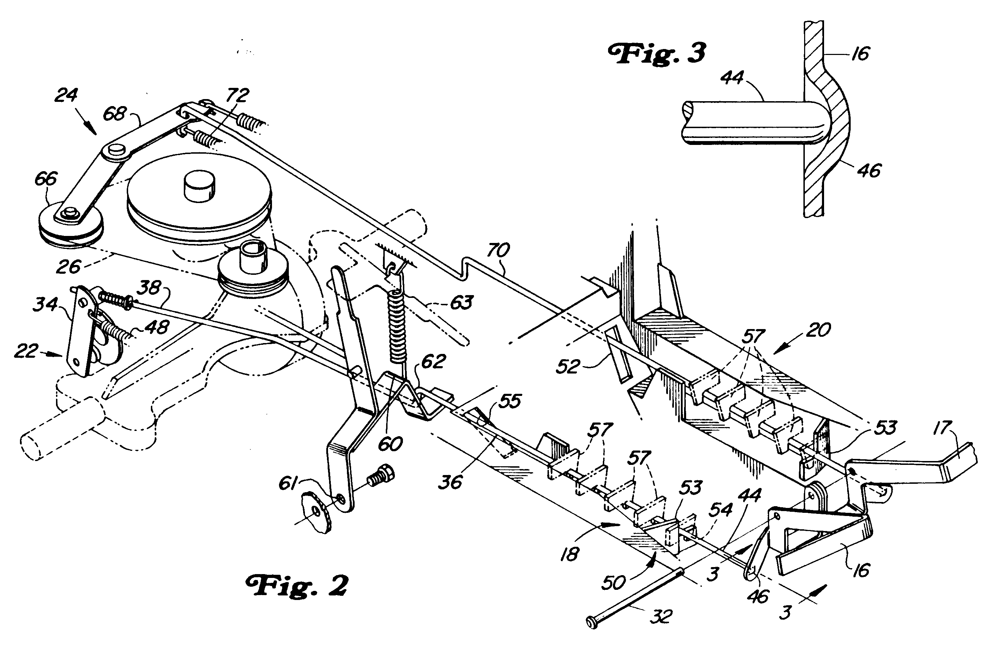

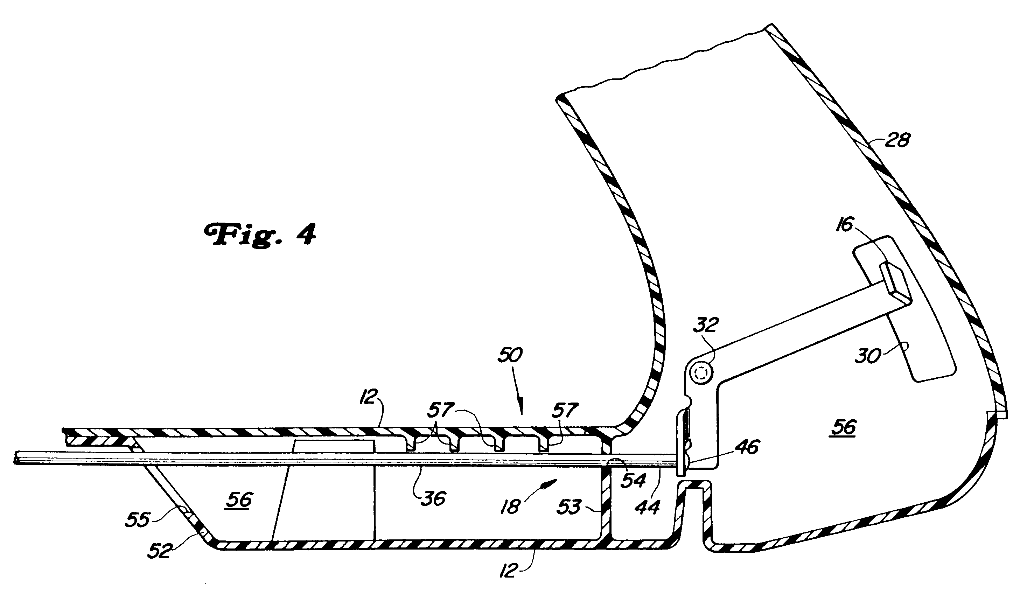

Das in Fig. 1 wiedergegebene Fahrzeug 10 ist mit einem Grundrahmen 12 und einem Fahrerstand 14 versehen, der Pedale 16 und 17 aufweist, um einen Antrieb zu entkuppeln und um das Fahrzeug 10 bremsen zu können. Gestänge 18 und 20, die am besten in der Fig. 2 zu erkennen sind, stellen die Verbindung der Pedale mit einer Bremse 22 und einer Riemenkupplung 24 her. Die Riemenkupplung ist derart ausgebildet, daß sie einen Antriebsriemen 26 spannen und entspannen kann. Der Grundrahmen 12 ist aus einem Kunststoff hergestellt und weist mindestens einen voll umschlossenen Raum auf, wie es aus Fig. 4 zu ersehen ist. Hierdurch wird die Steifigkeit und Festigkeit des Grundrahmens erhöht.

Die Pedale 16 und 17 können auch durch andere von der Bedienungsperson zu betätigende Organe ersetzt werden. Diese Organe oder Pedale 16 und 17 sind beiderseits einer Lenksäule 28 angeordnet. In Fig. 2 sind die beiden Pedale in ihrer betätigten Stellung (heruntergetreten) dargestellt, wobei das rechte Pedal 16 mit der Bremse 22 des Fahrzeuges 10 und das linke Pedal 17 mit der Riemenkupplung 24 in Verbindung steht. In Fig. 1 erkennbare Öffnungen 30 sind beiderseits in der Lenksäule 28 vorgesehen. Die Pedale sind durch diese Öffnungen 30 nach außen geführt. Innerhalb der Lenksäule 28 sind beide Pedale auf einem einzigen sich quer erstreckenden Zapfen 32 gelagert.

Die beiden Gestänge 18 und 20 erstrecken sich zwischen den Pedalen und den zugehörigen Komponenten 22 und 24. Die Gestänge sind in ihrem Aufbau und in ihrer Funktion identisch oder fast identisch, weshalb nachfolgend nur das Gestänge 18 für die Bremse im einzelnen beschrieben wird. Ein Schwenkarm 34 ist im Bereich des rückwärtigen Endes des Fahrzeuges 10 mit der Bremse gekuppelt. Er ist verschwenkbar, um die Bremse 22 betätigen zu können. Das rückwärtige Ende 38 einer Stange 36 ist an den Schwenkarm 34 angeschlossen. Von diesem rückwärtigen Ende aus erstreckt sich die Stange 36 nach vorne zu einem frontseitigen Ende 44, das in einer Ausbuchtung 46 des Pedals 16 anliegt. Das vordere Ende 44 der Stange 36 ist gerundet ausgebildet und die Ausbuchtung 46, die in einem unteren Bereich des Pedals 16 vorgesehen ist, ist eine Kugelpfanne. Eine mit dem Grundrahmen 12 verbundene Feder 48 ist anderenends an den Schwenkarm 34 derart angeschlossen, daß sie den Schwenkarm 34 und die mit dem Schwenkarm 34 verbundene Stange 36 nach vorne zieht. Damit ist die Feder 48 bestrebt, die Bremse in einem unbetätigten Zustand zu halten und beim Betätigen des Pedals 16 für die Bremse muß die Kraft der Feder 48 überwunden werden. Andererseits drückt die Feder 48 das vordere Ende 44 der Stange 36 immer in die kugelpfannige Ausbuchtung 46 des Pedals 16, wie es in Fig. 3 eingezeichnet ist. Infolge dieser Ausbildung wird das Gewicht der Stange 36 im wesentlichen nur von dem Schwenkarm 34 und dem Pedal 16 aufgenommen.

In den Fig. 2 und 4 sind Führungen 50 dargestellt, die eine Vielzahl von Teilen 52 und 53 oder Stegen aufweisen, die Bestandteil des Grundrahmens 12 sind und Öffnungen 54 und 55 aufweisen, die zur Aufnahme der Stange 36 dienen. Rippen 57 sind ebenfalls vorgesehen und in den Grundrahmen 12 integriert. Die Stege 52 und 53 und die Rippen 57 dienen zur Führung der Stange 36 beim Einbau, wobei die Stege 52 und 53 noch die zusätzliche Funktion übernehmen, daß sie bei einem an sich nicht zu erwartenden Lösen des Eingriffs von Stange 36 und Pedal 16 die Stange 36 auffangen und dann tragen. Ist jedoch die Stange 36 in der Ausbuchtung 46 des Pedals 16 fest aufgenommen, dann haben die Stege 52 und 53 keinen oder fast keinen Kontakt mit der Stange 36. Eine Reibung zwischen den Führungen 50 und der Stange 36 ist dadurch reduziert sowie die Möglichkeit, daß die Stange 36 blockiert werden könnte.

Im folgenden wird auf den Einbau des Gestänges 18 näher eingegangen. Zu allererst wird der Grundrahmen 12 zusammengebaut, der aus mindestens zwei miteinander zu verbindenden Plastikteilen gebildet ist. Diese werden zweckmäßig miteinander verklebt und bilden im zusammengebauten Zustand ein festes und im wesentlichen geschlossenes Gehäuse oder Teil mit entsprechenden Gehäuseabschnitten. Die Gehäuseabschnitte verleihen dem Grundrahmen 12 eine ausreichende Festigkeit. Der Grundrahmen wird dadurch auch verwindungssteif. Ein solcher im wesentlichen geschlossener Gehäuseabschnitt ist in Fig. 4 mit 56 bezeichnet und am vorderen Ende des Grundrahmens 12 vorgesehen. Er dient unter anderem zur Aufnahme der beiden Pedale 16 und 17 am Fahrerstand 14. Der Gehäuseabschnitt 56 ist an der Basis der Lenksäule 28 vorgesehen, die eine Lenkwelle umgibt. Zum Anschließen der Pedale an den Grundrahmen 12 wird zunächst das Pedal 16 oder 17 durch eine der Öffnungen 30 in der Lenksäule 28 in die Lenksäule eingeschoben und danach mit dem Zapfen 32 verbunden. Der Zapfen 32 wird hierzu von außen durch eine in der Lenksäule 28 vorgesehene Öffnung 58 eingesetzt und durch eine Bohrung in dem entsprechenden Pedal 16 oder 17 gesteckt. Das zweite Pedal wird danach durch die Öffnung 30 an der anderen Seite der Lenksäule 28 eingesetzt und auf den Zapfen geschoben. Sodann wird der Zapfen, dessen Länge größer ist als die Breite der Lenksäule, weiter geschoben, bis er an der anderen Seite der Lenksäule wieder austritt und dort entsprechend gesichert wird.

Danach können die Gestänge 18 und 20 angeschlossen werden. Hierzu ist der Grundrahmen 12 zweckmäßig umzudrehen bzw. auf seinen Kopf zu legen. Das rückseitige Ende des Grundrahmens ist in der Regel offen und die Stange wird von dem rückwärtigen Ende aus eingeführt und zunächst durch eine Öffnung 55 in dem Steg 52 geführt. Der Steg 52 ist die am weitesten hinten liegende Führung 50 und wird durch die Rückwand des Gehäuseabschnittes 56 gebildet, wobei die Öffnung 55 relativ groß gestaltet ist. Danach wird die Stange 36 weiter nach vorne geschoben, und zwar an den Rippen 57 vorbei, die von der Oberseite des Gehäuseabschnittes 56 nach unten weisen, jedoch in den Grundrahmen integriert sind. Die Höhe dieser Rippen 57 ändert sich kontinuierlich in Richtung auf eine Öffnung 54 in dem frontseitig vorgesehenen Steg 53, so daß die Stange 36 beim weiteren Vorwärtsschieben automatisch in diese Öffnung 54 eintreten kann. Da die Rippen 57 kontinuierlich ihre Höhe ändern und in Richtung auf die Öffnung 54, die im Vergleich zu der Öffnung 55 relativ klein ist, immer länger werden, wird beim Vorwärtsschieben der Stange 36 deren frontseitiges gerundetes Ende 44 gegebenenfalls ständig gegen die unteren Kanten der Rippen 57 stoßen und dabei leicht nach unten durchbiegen, um an der jeweiligen unteren Kante einer jeden Rippe 57 vorbeistreichen zu können. Auf diese Weise wird die Stange 36 derart geführt, daß sie leicht von der Montageperson in die Öffnung 54 eingeführt werden kann. Die relativ kleine Öffnung 54 in dem frontseitigen Steg 53 des Gehäuseabschnittes 56 ist zu der Ausbuchtung 46 des zugehörigen Pedals ausgerichtet. Sobald die Stange 36 durch die frontseitige Öffnung gesteckt ist, wird sie weiter nach vorne geschoben, bis sie gegen das Pedal 16 anliegt. Die Stege 52 und 53 und die Rippen 57 richten damit das frontseitige Ende 44 der Stange 36 beim Vorwärtsschieben zu der kugelpfannenartigen Ausbuchtung 46 aus, so daß die Stange in der Ausbuchtung schließlich zur Anlage kommen kann. Trifft die Stange 36 dabei nicht genau in die Mitte der Ausbuchtung, dann wird die halbkugelartige Ausbildung der Ausbuchtung dies bewerkstelligen. Nimmt die Stange ihre korrekte Position mit Bezug auf das Pedal ein, dann kann das rückwärtige Ende 38 der Stange 36 mit dem zugehörigen Schwenkarm 34 verbunden werden. Danach wird die Feder 48 zwischen dem Schwenkarm 34 und dem Grundrahmen 12 derart eingesetzt, daß die Stange 36 zusammen mit dem Schwenkarm 34 nach vorne gezogen wird.

Betätigt die Bedienungsperson das Pedal nicht, d. h. wird das Pedal nicht von der Bedienungsperson herunter getreten, so zieht die Feder 48 den Schwenkarm 34 nach vorne und die Bremse bleibt ausgerückt. Gleichzeitig hält die Feder 48 das frontseitige Ende der Stange 36 in der Ausbuchtung 46 in dem zugehörigen Pedal, die damit das frontseitige Ende 44 fest aufnimmt und auch trägt. Die Führungen 50 am Grundrahmen übernehmen in diesem Zustand keine oder fast keine Tragfunktion. Es besteht höchstens ein ganz geringfügiger Kontakt.

Wird nun das Pedal betätigt bzw. heruntergetreten, so verschwenkt es zunächst um seinen Zapfen 32 und die Ausbuchtung 46 verstellt sich dabei nach rückwärts. Die in die Ausbuchtung 46 eingreifende Stange 36 wird dadurch nach rückwärts verschoben und der Schwenkarm 34 entgegen dem Uhrzeigerdrehsinn entgegen der Wirkung der Feder 48 verschwenkt. Die Bremse 22 wird betätigt. Beim Betätigen der Bremse muß die Bedienungsperson natürlich die Kraft der Feder 48 überwinden, die aber dann immer noch das vordere Ende 44 der Stange 36 in der Ausbuchtung 46 hält. Auch bei betätigter Bremse wird das Gewicht der Stange 36 von dem Pedal und dem rückwärtigen Schwenkarm getragen. Auch beim Bremsen hat die Stange 36 nur unwesentlichen Kontakt mit den Führungen 50, so daß übergroße Reibung oder ein Blockieren vermieden ist.

Sobald die Bedienungsperson das Pedal freigibt, wird die Feder 48 den Schwenkarm 34 in seine Ausgangsposition zurückdrehen, die Stange nach vorne drücken und das Pedal in seine Ruhestellung zurückführen. Die Bremse wird dabei freigegeben. Auch bei diesem Vorgang bleibt der feste Eingriff der Stange 36 in die Ausbuchtung 46 im Pedal erhalten.

Vorkehrungen sind ebenfalls getroffen worden, um die Bremse im angezogenen Zustand feststellen zu können. Hierzu dient ein in Fig. 2 erkennbarer Hebel 60, der normaler Weise eine andere Funktion wahrnimmt, auf einer Schwenkverbindung 61 drehbar angeordnet ist und sich durch einen Schaltschlitz 63 im Grundrahmen 12 bis zu dem Fahrerstand 14 erstreckt. Zum Feststellen der Bremse ist der Schaltschlitz 63 mit einer seitlichen Ausnehmung versehen, in die der Hebel 60 eintreten kann, wenn die Bremse betätigt ist. Beim seitlichen oder nach außen Schwenken des Hebels 60, schwenkt ein innerer Teil des Hebels nach oben vor einen abgesetzten Teil 62 in der Stange 36 und blockiert dann bei angezogener Bremse eine Vorwärtsbewegung der Stange 36. Die Bremse bleibt im eingerückten Zustand festgestellt. Wenn die Bremse, wie vorstehend beschrieben wurde, ihre Parkstellung einnimmt, dann drückt die Feder 48 den abgesetzten Teil 62 der Stange 36 gegen den Hebel 60 und nicht mehr das frontseitige Ende 44 der Stange 36 in die Ausbuchtung 46 am Pedal und, solange der Hebel 60 in seiner Parkstellung verbleibt, kann auch das Gestänge 18 nicht mehr in seine Ausgangsposition zurückkehren. Nur das Pedal ist frei. Aber auch dann, wenn die Bedienungsperson ihren Fuß von dem Pedal nimmt, wird das Pedal nicht in seine Ausgangsposition zurückschwenken, da die Stange 36 durch den Hebel in ihrer rückwärtigen Stellung gehalten wird. Das Pedal verbleibt infolge seines Gewichtes in der heruntergetretenen Stellung. In dieser Stellung hat die Ausbuchtung 46 aber immer noch Kontakt mit dem vorderen Ende 44 der Stange 36, trägt dann aber nicht unbedingt das Gewicht des vorderen Stangenendes. Vielmehr wird das vordere Stangenende dann von dem vorderen Steg 53 aufgenommen. Dennoch hält die Öffnung 54 im frontseitigen Steg die Stange zu der Ausbuchtung ausgerichtet, und, sobald die Parksperre gelöst wird, wird die Feder 48 die Stange wieder fest in die Ausbuchtung 46 drücken.

Die bisherige Beschreibung bezog sich im wesentlichen auf das Gestänge 18 an der rechten Maschinenseite. Das Gestänge 20 an der linken Maschinenseite ist ähnlich ausgebildet. Es stellt eine Verbindung des linken Pedals 17 mit der Riemenkupplung 24 her, die am rückwärtigen Ende des Fahrzeuges 10 vorgesehen ist. Der bereits erwähnte Antriebsriemen 26 stellt eine Antriebsverbindung zwischen einer Riemenscheibe an einer Ausgangswelle eines Motors mit einer Riemenscheibe an der Eingangswelle eines Endgetriebes her. Über eine Spannrolle 66 kann diese Antriebsverbindung unterbrochen werden. Die Spannrolle 66 ist hierzu zwischen zwei Stellungen an einem Schwenkarm 68 verstellbar angeordnet. In der einen Endstellung der Spannrolle bzw. des Schwenkarmes bleibt die Antriebsverbindung erhalten und der Riemen gespannt, während in der anderen Endstellung der Riemen entspannt und die Antriebsverbindung damit unterbrochen ist. Eine Verschwenkung des Schwenkarms 68 in eine Endstellung, in der der Riemen entspannt ist, erfolgt durch die Betätigung des linken Pedals 17, das über eine Stange 70 mit dem Schwenkarm 68 in Verbindung steht. Die Rückführung der Stange 70 nach vorne und das Zurückstellen des linken Pedals 17 nach oben sowie das Zurückschwenken des Schwenkarmes mit seiner Spannrolle 66 in die andere Endstellung, in der die Antriebsverbindung wieder hergestellt ist, erfolgt über eine am Grundrahmen 12 angreifende Feder 72, die mit ihrem anderen Ende an den Schwenkarm 68 angeschlossen ist.

## Patentansprüche

1. Stellvorrichtung für eine an einem Fahrzeug (10) vorgesehene Komponente mit wenigstens einem Stellmittel (16 bzw. 17) und einem an die Komponente angeschlossenen Gestänge (18 bzw. 20), wobei das Gestänge (18 bzw. 20) über das Stellmittel (16 bzw. 17) gegen die Wirkung einer Feder (48) in wenigstens eine Richtung verstellbar ist und eine Anschlagfläche aufweist, die unter der Wirkung der Feder (48) in einer Ausbuchtung (46) des Stellmittels (16 bzw. 17) anliegt, dadurch gekennzeichnet, daß das als Anschlagfläche ausgebildete Ende des Gestänges (18 bzw. 20) in der Ausbuchtung (46) des Stellmittels (16 bzw. 17) anliegt, die Ausbuchtung (46) und das als Anschlagfläche ausgebildete Ende des Gestänges (18 bzw. 20) in einer durch eine Bedienungsperson des Fahrzeuges unzugänglichen Kammer bzw. in einem derartigen Gehäuseabschnitt (56) angeordnet sind, die Feder (48) außerhalb einer derartigen Kammer bzw. eines derartigen Gehäuseabschnittes (56) angeordnet ist und das die Kammer bzw. der Gehäuseabschnitt (56) Führungselemente (52, 53, 54, 55, 57) aufweist, die das Gestänge (18 bzw. 20) lose und verschiebbar aufnehmen und auf die Ausbuchtung (46) im Stellmittel (16 bzw. 17) ausgerichtet sind.

2. Stellvorrichtung nach Anspruch 1, dadurch gekennzeichnet, daß mindestens eines der Führungselemente als ein mit einer Öffnung (54, 55) versehener Gehäuseteil (52, 53) ausgebildet ist.

3. Stellvorrichtung nach Anspruch 1, dadurch gekennzeichnet, daß das in der Ausbuchtung (46) des Stellteils (16, 17) anliegende Ende (44) des Gestänges (18, 20) abgerundet ist.

4. Stellvorrichtung nach einem oder mehreren der vorherigen Ansprüche, dadurch gekennzeichnet, daß die Fahrzeugkomponente einen Stellarm (34, 68) aufweist, an dem das Gestänge (18, 20) mit seinem der Ausbuchtung (46) abgelegenen Ende angeschlossen ist und die Feder (48) angreift.

5. Stellvorrichtung nach einem oder mehreren der vorherigen Ansprüche, dadurch gekennzeichnet, daß das Stellmittel (16, 17) als ein in eine Steuersäule (28) durch eine in dieser vorgesehene Öffnung (30) einsetzbares Pedal ausgebildet und mit einem die Ausbuchtung (46) aufweisenden Ausleger versehen ist.

6. Stellvorrichtung nach einem oder mehreren der vorherigen Ansprüche dadurch gekennzeichnet, daß der Stellarm (34, 68) mit seiner Feder (34, 72) außerhalb der den Ausleger mit der Ausbuchtung (46) aufnehmenden im wesentlichen geschlossenen Kammer (56) angeordnet ist.

7. Stellvorrichtung nach einem oder mehreren der vorherigen Ansprüche, dadurch gekennzeichnet, daß die Fahrzeugkomponente eine Fahrzeugbremse und / oder eine Kupplung ist, die am rückwärtigen Ende des Fahrzeuges (10) angeordnet ist bzw. sind.

## Claims

1. Adjusting device for a component provided on a vehicle (10), with at least one adjusting means (16 or 17) and a linkage (18 or 20) connected to the component, wherein the linkage (18 or 20) is displaceable via the adjusting means (16 or 17) against the action of a spring (48) in at least one direction and comprises a stop face which under the action of the spring (48) abuts in an indentation (46) of the adjusting means (16 or 17), characterised in that the end of the linkage (18 or 20) constructed as the stop face abuts in the indentation (46) of the adjusting means (16 or 17), the indentation (46) and the end of the linkage (18 or 20) constructed as the stop face are arranged in a chamber inaccessible to an operator of the vehicle or in such a housing section (56), the spring (48) is arranged outside such a chamber or such a housing section (56), and the chamber or the housing section (56) comprises guide elements (52, 53, 54, 55, 57) which receive the linkage (18 or 20) loosely and slidably and are aligned with the indentation (46) in the adjusting means (16 or 17).

2. Adjusting device according to claim 1, characterised in that at least one of the guide elements is constructed as a housing portion (52, 53) provided with an opening (54, 55).

3. Adjusting device according to claim 1, characterised in that the end (44) of the linkage (18, 20) which abuts in the indentation (46) of the adjusting member (16, 17) is rounded.

4. Adjusting device according to one or more of the preceding claims, characterised in that the vehicle component comprises an adjusting arm (34, 68) to which the linkage (18, 20) is connected by its end remote from the indentation (46) and which is engaged by the spring (48).

5. Adjusting device according to one or more of the preceding claims, characterised in that the adjusting means (16, 17) is constructed as a pedal which can be inserted in a control column (28) through an opening (30) provided in the latter and is provided with an extension comprising the indentation (46).

6. Adjusting device according to one or more of the preceding claims, characterised in that the adjusting arm (34, 68) is arranged with its spring (34, 72) outside the essentially closed chamber (56) which receives the extension with the indentation (46).

7. Adjusting device according to one or more of the preceding claims, characterised in that the vehicle component is a vehicle brake and/or a clutch which is or are arranged at the rear end of the vehicle (10).

## Revendications

1. Dispositif de réglage pour un composant prévu sur un véhicule (10), comportant au moins un moyen de réglage (16 ou 17) et une tringlerie (18 ou 20) raccordée au composant, la tringlerie (18 ou 20) étant réglable dans au moins une direction par l'intermédiaire du moyen de réglage (16 ou 17) à l'encontre de l'action d'un ressort (48), et possédant un surface de butée, qui s'applique, sous l'action du ressort (48), dans un évidement (46) du moyen de réglage (16 ou 17), caractérisé en ce que l'extrémité, réalisée sous la forme d'une surface de butée, de la tringlerie (18 ou 20) s'applique dans l'évidement (46) du moyen de réglage (16 ou 17), que l'évidement (46) et l'extrémité, réalisée sous la forme d'une surface de butée, de la tringlerie (18 ou 20) sont disposés dans une chambre, qui n'est pas accessible à un opérateur faisant fonctionner le véhicule, ou dans une telle partie de carter (56), que le ressort (48) est disposé à l'extérieur d'une telle chambre ou d'une telle partie de carter (56) et que la chambre ou la partie de carter (56) comporte des éléments de guidage (52,53,54,55,57), qui logent la tringlerie (18 ou 20) de façon lâche et de manière qu'elle puisse se déplacer et sont dirigées vers l'évidement (46) présent dans le moyen de réglage (16 ou 17).

2. Dispositif de réglage selon la revendication 1, caractérisé en ce qu'au moins l'un des éléments de guidage est agencé sous la forme d'une partie de carter (52,53) pourvue d'une ouverture (54,55).

3. Dispositif de réglage selon la revendication 1, caractérisé en ce que l'extrémité (44), qui l'applique dans l'évidement (46) de la partie de réglage (16,17), de la tringlerie (18,20) est arrondie.

4. Dispositif de réglage selon une ou plusieurs des revendications précédentes, caractérisé en ce que le composant du véhicule comporte un bras de réglage (34,68), auquel la tringlerie (18,20) est raccordée par son extrémité située à l'opposé de l'évidement (46) et auquel est accroché le ressort (48).

5. Dispositif de réglage selon une ou plusieurs des revendications précédentes, caractérisé par le fait que le moyen de réglage (16,17) est agencé sous la forme d'une pédale qui peut être insérée dans une colonne de commande (28) par une ouverture (30) prévue dans cette colonne, et est équipé d'un bras en console qui comporte l'évidement (46).

6. Dispositif de réglage selon une ou plusieurs des revendications précédentes, caractérisé par le fait que le bras de réglage (34,68) avec son ressort (34,72) est disposé à l'extérieur de la chambre essentiellement fermée (56), qui loge le bras en console pourvu de l'évidement (46).

7. Dispositif de réglage selon une ou plusieurs des revendications précédentes, caractérisé en ce que le composant du véhicule est un frein du véhicule et/ou un embrayage, qui est ou sont monté(s) sur l'extrémité arrière du véhicule (10).
